# EUROPEAN PATENT APPLICATION

(11) **EP 4 343 445 A1**
(43) Date of publication of application: **27.03.2024**
(21) Application number: 23163668.9
(22) Date of filing: 23.03.2023
(51) Int. Cl.: G03G 15/01, G03G 15/16, G03G 15/00

(54) **IMAGE FORMING APPARATUS AND IMAGE FORMING PROGRAM**

(30) Priority: 26.09.2022 JP 2022153049
(71) Applicant: FUJIFILM Business Innovation Corp., Minato-ku Tokyo (JP)
(72) Inventor: FUJITA, Yuzo, Yokohama-shi, Kanagawa (JP); NISHIKATA, Takumi, Yokohama-shi, Kanagawa (JP); WAIDA, Eiichi, Yokohama-shi, Kanagawa (JP); CHIKA, Yusuke, Yokohama-shi, Kanagawa (JP); UCHIYAMA, Kazunobu, Yokohama-shi, Kanagawa (JP); KIMURA, Hideo, Yokohama-shi, Kanagawa (JP)
(74) Representative: Kurig, Thomas

(57) **Abstract**

An image forming apparatus includes a plural image forming units each having a plural image forming sections, and an intermediate transfer body on which toner images formed by the plural image forming sections are primarily transferred; a plural secondary transfer units that are provided corresponding to the plural the image forming units, and secondarily transfer the toner images of the intermediate transfer body to a recording medium; and a processor configured to: in response to an instruction for adjusting misalignment of the toner images, execute a mode in which a first chart for checking amounts of misalignment between a toner image formed by a reference image forming section and the toner images formed by another image forming section, for each image forming unit, and a second chart for checking amounts of misalignment between toner images formed by the reference image forming sections of the plural image forming units are secondarily transferred to the recording medium and output, and an input of a first adjustment value for adjusting misalignment for each image forming unit, read from the first chart, and an input of a second adjustment value for adjusting misalignment between the image forming units, read from the second chart, are received.

## Description

### BACKGROUND OF THE INVENTION

### (i) Field of the Invention

The present invention relates to an image forming apparatus and an image forming program.

### (ii) Description of Related Art

JP2011-137956A discloses a technique related to a printing apparatus and a printing method which form an image by using a first toner and a second toner on one sheet by using a plurality of printing apparatuses and a program that executes the printing method. In the related art, in a printing system in which a paper discharge unit of a first printing apparatus that prints using a first color material and a paper feed unit of a second printing apparatus that prints using a second color material are connected to each other, the first printing apparatus generates first print data and second print data from input print data, transmits the second print data to the second printing apparatus, and causes the first print data to be printed on paper using the first color material, and the paper to be discharged from the paper discharge unit. The second printing apparatus acquires a correction parameter for correcting the print position of the second print data in order to suppress plate misalignment that occurs on the paper in a case where the paper, on which the first print data is printed and discharged, is fed from the paper feed unit and the second print data is printed, corrects the print position of the second print data to suppress the plate misalignment, and prints the corrected second print data by using the second color material, on the paper on which the first print data is printed.

### SUMMARY OF THE INVENTION

In an image forming apparatus that includes a plurality of image forming units having an intermediate transfer body to which a toner image formed by a plurality of image forming sections is primarily transferred, and secondarily transfers the toner image of the intermediate transfer body of each of the plurality of image forming units to a recording medium, it is necessary to adjust the misalignment between the plurality of image forming units, as well as adjusting the misalignment of each image forming section of each image forming unit, in order to accurately adjust the misalignment of each toner image secondarily transferred to the recording medium.

In view of the above facts, an object of the present invention is to provide an image forming apparatus and an image forming program which enable adjustment of misalignment between toner images of image forming units.

According to a first aspect of the present disclosure, there is provided an image forming apparatus including: a plurality of image forming units each having a plurality of image forming sections, and an intermediate transfer body on which toner images formed by the plurality of image forming sections are primarily transferred; a plurality of secondary transfer units that are provided corresponding to the plurality of the image forming units, and secondarily transfer the toner images of the intermediate transfer body to a recording medium; and a processor configured to: in response to an instruction for adjusting misalignment of the toner images, execute a mode in which a first chart for checking amounts of misalignment between a toner image formed by a reference image forming section and the toner images formed by another image forming section, for each image forming unit, and a second chart for checking amounts of misalignment between toner images formed by the reference image forming sections of the plurality of image forming units are secondarily transferred to the recording medium and output, and an input of a first adjustment value for adjusting misalignment for each image forming unit, read from the first chart, and an input of a second adjustment value for adjusting misalignment between the image forming units, read from the second chart, are received.

According to a second aspect of the present disclosure, there is provided the image forming apparatus according to the first aspect, in which in the mode, after the first chart is secondarily transferred to the recording medium and output to receive the input of the first adjustment value, the second chart may be secondarily transferred to the recording medium and output to receive the input of the second adjustment value.

According to a third aspect of the present disclosure, there is provided the image forming apparatus according to the second aspect, in which in the mode, misalignment of the plurality of the image forming sections of each image forming unit may be adjusted by using the first adjustment value, and misalignment of each of the plurality of image forming sections of the plurality of the image forming units may be adjusted by using the second adjustment value.

According to a fourth aspect of the present disclosure, there is provided the image forming apparatus according to the first aspect, in which in the mode, after the second chart is secondarily transferred to the recording medium and output to receive the input of the second adjustment value, the first chart may be secondarily transferred to the recording medium and output to receive the input of the first adjustment value.

According to a fifth aspect of the present disclosure, there is provided the image forming apparatus according to the fourth aspect, in which in the mode, misalignment between the reference image forming sections of the plurality of image forming units may be adjusted by using the second adjustment value, and misalignment of another image forming section with respect to the reference image forming sections of the plurality of image forming units may be adjusted by using the first adjustment value.

According to a sixth aspect of the present disclosure, there is provided the image forming apparatus according to the third aspect or the fifth aspect, in which in the mode, in a case where there is an image forming section for which misalignment is not to be adjusted by reflecting the second adjustment value, the second adjustment value may be divided and reflected in the plurality of the image forming units.

According to a seventh aspect of the present disclosure, there is provided the image forming apparatus according to the sixth aspect, in which in the mode, in a case where there is an image forming section for which the misalignment is not to be adjusted even by dividing and reflecting the second adjustment value, the image forming unit that does not have the image forming section, for which the misalignment is not to be adjusted, may be selected.

According to an eighth aspect of the present disclosure, there is provided the image forming apparatus according to any one of the first aspect to the seventh aspect, in which in the mode, after the input of the first adjustment value and the input of the second adjustment value are received, the first chart and the second chart may be formed again, secondarily transferred to the recording medium, and output.

According to a ninth aspect of the present disclosure, there is provided an image forming program causing a computer to execute a process including: in response to an instruction for adjusting misalignment of toner images, executing a mode in which a first chart for checking amounts of misalignment between a toner image formed by a reference image forming section and the toner images formed by another image forming section, for each image forming unit, and a second chart for checking amounts of misalignment between toner images formed by the reference image forming sections of a plurality of image forming units are secondarily transferred to a recording medium and output, and an input of a first adjustment value for adjusting misalignment for each image forming unit, read from the first chart, and an input of a second adjustment value for adjusting misalignment between the image forming units, read from the second chart, are received.

According to the image forming apparatus of the first aspect of the invention, it is possible to adjust the misalignment of the toner images between the image forming units.

According to the image forming apparatus of the second aspect of the invention, an input error can be reduced as compared with a case where the first adjustment value and the second adjustment value are input after both the first chart and the second chart are output.

According to the image forming apparatus of the third aspect of the invention, the misalignment of the toner images of image forming sections other than the reference image forming section is adjusted, as compared with a case where only the misalignment of the reference image forming section of the plurality of image forming units is adjusted again.

According to the image forming apparatus of the fourth aspect of the invention, an input error can be reduced as compared with a case where the first adjustment value and the second adjustment value are input after both the first chart and the second chart are output.

According to the image forming apparatus of the fifth aspect of the invention, the misalignment of the toner images of image forming sections other than the reference image forming section is adjusted, as compared with a case where only the misalignment of the reference image forming section of the plurality of image forming units is adjusted.

According to the image forming apparatus of the sixth aspect of the invention, it is possible to adjust the misalignment of a large number of image forming sections, as compared with a case where the second adjustment value is not divided.

According to the image forming apparatus of the seventh aspect of the invention, desired misalignment adjustment can be performed, as compared with a case where an image forming unit without having an image forming section for which the misalignment cannot be adjusted is fixed.

According to the image forming apparatus of the eighth aspect of the invention, the result of the misalignment adjustment can be accurately checked, as compared with a case where both the first chart and the second chart are not output.

According to the image forming program of the ninth aspect of the invention, it is possible to adjust the misalignment of the toner images between the image forming units.

### BRIEF DESCRIPTION OF THE DRAWINGS

Exemplary embodiment(s) of the present invention will be described in detail based on the following figures, wherein:
Fig. 1 is a configuration diagram of an image forming apparatus according to a first exemplary embodiment of the present invention;
Fig. 2 is a partially enlarged view of Fig. 1;
Fig. 3 is a block diagram showing an example of a hardware configuration of the image forming apparatus;
Fig. 4 is a schematic diagram schematically showing a configuration of a major part of the image forming apparatus according to the first exemplary embodiment;
Fig. 5 is a block diagram showing an example of a functional configuration of a control device;
Fig. 6 is a diagram of a first chart A;
Fig. 7 is a diagram of a first chart B;
Fig. 8 is a diagram of a second chart;
Fig. 9 is a flowchart showing a flow of a first procedure example of a misalignment adjustment mode;
Fig. 10 is a flowchart showing a flow of a second procedure example of the misalignment adjustment mode;
Fig. 11 is a flowchart showing a flow of a third procedure example of the misalignment adjustment mode; and
Fig. 12 is a flowchart showing a flow of the third procedure example of the misalignment adjustment mode.

### DETAILED DESCRIPTION OF THE INVENTION

### <Exemplary Embodiment>

An image forming apparatus according to an exemplary embodiment of the present invention will be described.

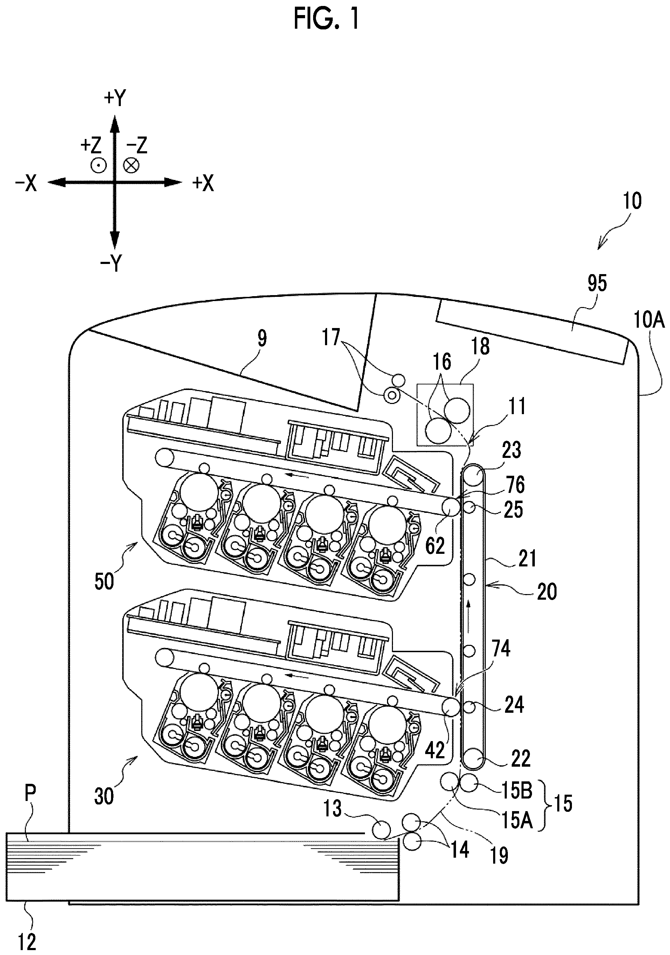

In addition, the width direction of the image forming apparatus 10 shown in Fig. 1 is an X direction, the height direction is a Y direction, and the depth direction is a Z direction, which are indicated by arrows X, Y, and Z, respectively. In a case where it is necessary to distinguish one side and the other side of the X direction, the Y direction, and the Z direction, with respect to the image forming apparatus 10 shown in Fig. 1, the right side is described as the +X side, the left side is described as the -X side, and the upper side is described as the +Y side, the lower side is described as -Y side, the front side is described as +Z side, and the rear side is described as -Z side. Further, in the present exemplary embodiment, the recording paper P is adopted as an example of the recording medium, the upstream side in the conveyance direction in which the recording paper P is conveyed is defined as the "upstream side in the conveyance direction", and the downstream side in the conveyance direction is "downstream side in the conveyance direction". In addition, the image forming apparatus 10 in the present exemplary embodiment is a so-called single-pass type, and printing is performed by the recording paper P passing through the front of a first image forming unit 30 and a second image forming unit 50, which will be described later.

### [Overall Configuration]

First, the overall configuration of the image forming apparatus will be described.

As shown in Fig. 1, the image forming apparatus 10 includes an operation panel 95, an accommodating unit 12 that accommodates recording paper P as an example of a recording medium, a conveyance unit 11 that conveys the recording paper P along a conveyance path 19, and the first image forming unit 30 and the second image forming unit 50 that form a toner image to be transferred to the recording paper P. In addition, the toner image is an image using a toner as an example of a color material such as a developer.

The accommodating unit 12 can be pulled out from the image forming apparatus main body 10A, which is the apparatus main body of the image forming apparatus 10, and accommodates the recording paper P.

The conveyance unit 11 includes a feed roll 13, a conveyance roll 14, a resist roll pair 15, a conveyor belt device 20, a fixing device 18, a discharge roll 17, and the like, in order from the upstream side in the conveyance direction.

The feed roll 13 sends out the recording paper P accommodated in the accommodating unit 12 to the conveyance path 19 configuring the conveyance unit 11. The conveyance roll 14 conveys the recording paper P along the conveyance path 19.

The resist roll pair 15 conveys the recording paper P conveyed by the conveyance roll 14 to a secondary transfer position TJ2 on the upstream side, which will be described later. In the resist roll pair 15, the pinch roll 15B rotates in a manner driven by the resist roll 15A. Then, the resist roll pair 15 sandwiches the recording paper P between the resist roll 15A and the pinch roll 15B, and conveys the recording paper P to the downstream side in the conveyance direction.

The conveyor belt device 20 conveys the recording paper P to the downstream side in the conveyance direction along the conveyance path 19 while secondarily transferring the toner image formed by the first image forming unit 30 and the second image forming unit 50 to the recording paper P. In addition, the details of the conveyor belt device 20 will be described later.

The fixing device 18 has a fixing roll pair 16, passes through the fixing roll pair 16, and heats and pressurizes the recording paper P, on which the toner image is transferred, to fix the toner image on the recording paper P.

The discharge roll 17 discharges the recording paper P on which the toner image is fixed by the fixing device 18, to the discharge unit 9.

The first image forming unit 30 and the second image forming unit 50 are disposed side by side in the vertical direction. In addition, in the present exemplary embodiment, the second image forming unit 50 is disposed above the first image forming unit 30. From another point of view, the second image forming unit 50 is disposed on the downstream side in the conveyance direction of the first image forming unit 30.

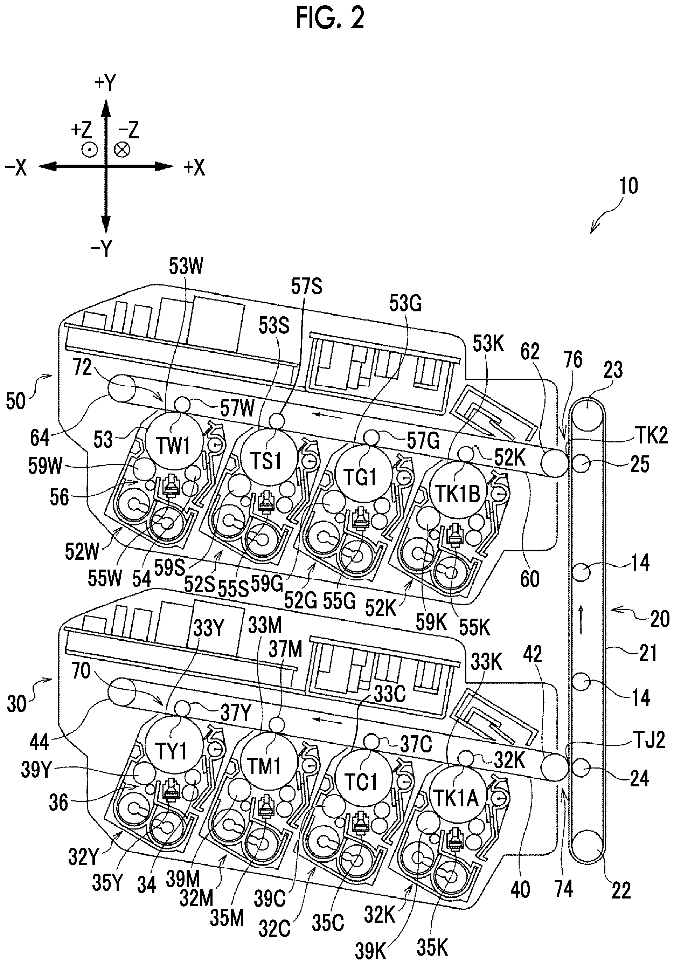

As shown in Fig. 2, the first image forming unit 30 includes four image forming sections 32, and an endless intermediate transfer belt 40 as an example of an intermediate transfer body. The toner images formed by the four image forming sections 32 are transferred to the intermediate transfer belt 40, and the intermediate transfer belt 40 is mounted to be rotatable counterclockwise with a front view of Fig. 2.

The image forming section 32 includes an image forming section 32K that forms a black toner image of black color, an image forming section 32M that forms a magenta toner image of magenta color, an image forming section 32C that forms a cyan toner image of cyan color, and an image forming section 32Y that forms a yellow toner image of yellow color. The four image forming sections 32 are disposed in the order of the image forming section 32Y, the image forming section 32M, the image forming section 32C, and the image forming section 32K in order from the upstream side in the rotation direction (the side closer to the support roll 44 to be described later) in which the intermediate transfer belt 40 rotates. In addition, in the following, the upstream side in the rotation direction of the intermediate transfer belt 40 is referred to as "the rotation direction upstream side", and the downstream side in the rotation direction is referred to as "the rotation direction downstream side". That is, in the image forming section 32, the image forming section 32Y is disposed on the most rotation direction downstream side.

In addition, in a case where it is not necessary to distinguish between Y, M, C, and K, Y, M, C, and K are omitted.

The image forming section 32 includes a photoconductor 33, a charging member 34 that charges the surface of the photoconductor 33, an exposure device 35 that irradiates the charged photoconductor 33 with exposure light, and a developing device 36 that develops an electrostatic latent image formed by the irradiation of the exposure light to be visualized as a toner image.

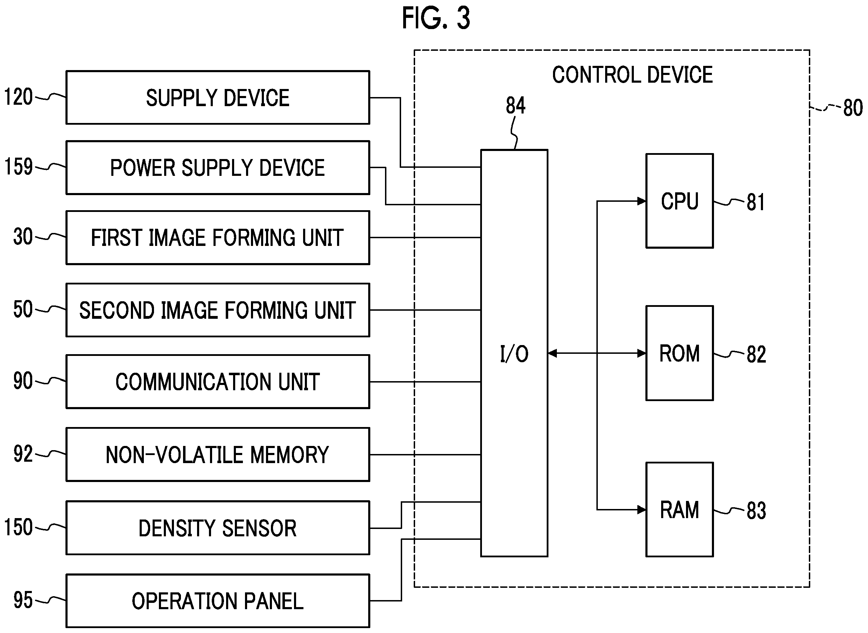

Developing rolls 39Y, 39M, 39C, and 39K are provided in the developing device 36, respectively, and are applied with a developing bias by a power supply device 159 (see Fig. 3), respectively.

Further, primary transfer rolls 37Y, 37M, 37C, and 37K for transferring the toner image formed by the image forming section 32 to the intermediate transfer belt 40 are disposed at positions facing each photoconductor 33 with the intermediate transfer belt 40 interposed therebetween. The intermediate transfer belt 40 is wound around a support roll 44 that supports the intermediate transfer belt 40 and a backup roll 42 that is disposed on the secondary transfer unit 74 on the upstream side, which will be described later. In addition, the primary transfer unit 70 includes a photoconductor 33, a primary transfer roll 37, and an intermediate transfer belt 40. Further, the primary transfer positions TY1, TM1, TC1, and TK1A are set between the photoconductors 33Y, 33M, 33C, and 33K and the intermediate transfer belt 40, respectively.

The second image forming unit 50 has the same configuration as the above-described image forming unit 30 except that colors for forming an image are different. The second image forming unit 50 includes four image forming sections 52 and an endless intermediate transfer belt 60 as an example of an intermediate transfer body. The toner images formed by the four image forming sections 52 are transferred to the intermediate transfer belt 60, and the intermediate transfer belt 60 is mounted to be rotatable counterclockwise with a front view of Fig. 2.

In addition, the image forming section 52 has the same configuration as the image forming section 32 of the first image forming unit 30. Further, the intermediate transfer belt 60 and the primary transfer roll 57 described later have the same configuration as the intermediate transfer belt 40 and the primary transfer roll 37 of the first image forming unit 30. Further, the other constituent members configuring the second image forming unit 50 are the same as in the first image forming unit 30.

The image forming section 52 includes an image forming section 52K that forms a black toner image of black color, an image forming section 52G that forms a gold toner image of gold color, an image forming section 52S that forms a silver toner image of silver color, and an image forming section 52W that forms a white toner image of white color. The four image forming sections 52 are disposed in the order of the image forming section 52W, the image forming section 52S, the image forming section 52G, and the image forming section 52K, from the rotation direction upstream side (in the present example, the side closer to the support roll 64 described later). That is, in the image forming section 52, the image forming section 52K is disposed on the most rotation direction downstream side, the image forming section 52G and the image forming section 52S are disposed on the rotation direction upstream side with respect to the image forming section 52K, and the image forming section 52W is disposed on the most rotation direction upstream side.

In addition, in a case where it is not necessary to distinguish between W, S, G, and K, W, S, G, and K are omitted.

The image forming section 52 includes a photoconductor 53, a charging member 54, an exposure device 55, and a developing device 56.

Developing rolls 59W, 59S, 59G, and 59K are provided in the developing device 56, respectively, and are applied with a developing bias by the power supply device 159 (see Fig. 3), respectively.

Further, the primary transfer rolls 57W, 57S, 57G, and 57K are disposed at positions facing respective photoconductors 53 with the intermediate transfer belt 60 interposed therebetween. The intermediate transfer belt 60 is wound around a support roll 64 and a backup roll 62 disposed on a secondary transfer unit 76 on the downstream side, which will be described later. In addition, the primary transfer unit 72 includes the photoconductor 53, the primary transfer roll 57, and the intermediate transfer belt 60. Further, the primary transfer positions TW1, TS1, TG1, and TK1B are set between the photoconductors 53Y, 53M, 53C, and 53W and the intermediate transfer belt 60, respectively.

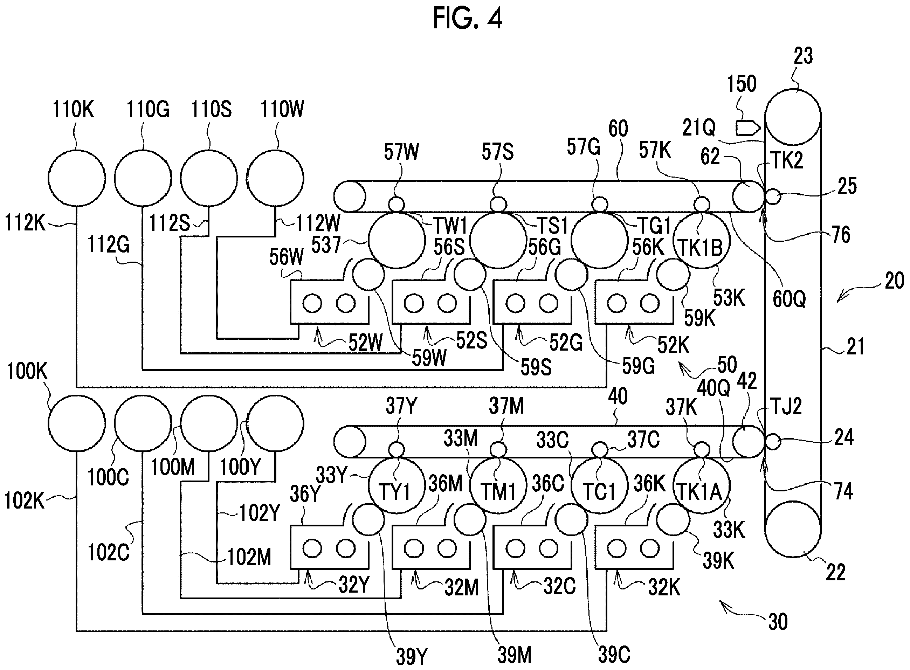

As shown in Fig. 4, the developing device 36 of the image forming section 32 of each color of the first image forming unit 30 and the developing device 56 of the image forming section 52 of each color of the second image forming unit 50 are connected to a plurality of toner cartridges 100 and 110 containing toner corresponding to each color via supply paths 102 and 112. The toner accommodating the respective toner cartridges 100 and 110 is appropriately supplied to the developing devices 36 and 56 of respective colors via the supply paths 102 and 112 by operating a supply device 120 (see Fig. 3) provided in the supply paths 102 and 112. In addition, the supply device 120 (see Fig. 3) is provided with individual developing devices 36Y, 36M, 36C, 36K, 56C, 56W, 56G, and 56K from the toner cartridges 100Y, 100M, 100C, 100K, 110W, 110S, 110G, and 110K, respectively. The configuration is such that toner can be supplied to the device.

In addition, hereinafter, the case of representing the black color of the image forming section 32K of the first image forming unit 30 will be referred to as "K1", and the case of representing the black color of the image forming section 52K of the second image forming unit 50 will be referred to as "K2".

### [Details of Conveyor Belt Device]

Next, the details of the conveyor belt device 20 will be described.

As shown in Fig. 2, the conveyor belt device 20 includes an endless conveyor belt 21, support rolls 22 and 23 that support the conveyor belt 21, the conveyance rolls 14, and backup rolls that sandwich the intermediate transfer belts 40 and 60. Secondary transfer rolls 24 and 25 disposed at positions facing the 42 and 62 are included.

The secondary transfer roll 24 sandwiches the recording paper P and the conveyor belt 21 between the backup roll 42 and the secondary transfer roll 24, and transfers the toner image formed on the intermediate transfer belt 40 of the first image forming unit 30 to the recording paper P. Similarly, the secondary transfer roll 25 sandwiches the recording paper P and the conveyor belt 21 between the backup roll 62 and the secondary transfer roll 25, and transfers the toner image formed on the intermediate transfer belt 60 of the second image forming unit 50 to the recording paper P.

In addition, the secondary transfer unit 74 includes the backup roll 42, the secondary transfer roll 24, and the intermediate transfer belt 40. Further, the secondary transfer unit 76 includes the backup roll 62, the secondary transfer roll 25, and the intermediate transfer belt 60.

A transfer bias is applied to the secondary transfer rolls 24 and 25 by the power supply device 159 (see Fig. 3), respectively.

The secondary transfer position TJ2 is defined between the intermediate transfer belt 40 of the first image forming unit 30 and the conveyor belt 21, and the secondary transfer position TK2 is defined between the intermediate transfer belt 60 of the second image forming unit 50 and the conveyor belt 21. In addition, the secondary transfer position TK2 is the most downstream secondary transfer position.

Further, the conveyor belt device 20 includes a belt cleaning device (not shown) that cleans the conveyor belt 21. The belt cleaning device (not shown) performs cleaning on the rotation direction upstream side of the most downstream secondary transfer position TK2 and on the rotation direction downstream side of the most upstream secondary transfer position TJ2. In addition, in the conveyor belt 21, a position to be cleaned by a belt cleaning device (not shown) is defined as a cleaning position CL.

As shown in Fig. 4, a density sensor 150 as an example of a detection device that detects a patch image for automatic adjustment secondarily transferred to the conveyor belt 21 is provided in the vicinity of an upper end portion of the conveyor belt 21.

The operation panel 95 of the present exemplary embodiment shown in Fig. 1 is a display on which a touch panel is superimposed, but the present invention is not limited thereto. An icon image or the like is displayed on the operation panel 95 as an example of an image representing an item that is an operation target in order to execute a function desired by the user. There is no restriction on the type of the icon image as long as the icon image is an operation target of the user, and the icon image includes, for example, a button, a scroll bar, a check box, and a radio button. In a case where a user operation is performed on the icon image, a process associated with the operation content in advance is executed by the control device 80 (see Fig. 3) described later, and a response to the operation is displayed on the operation panel 95.

### [Control Device]

Next, the control device 80 that controls the operation of the image forming apparatus 10 will be described.

Fig. 3 is a block diagram showing a hardware configuration of the image forming apparatus 10. As shown in Fig. 3, the control device 80 is electrically connected to the first image forming unit 30, the second image forming unit 50, a communication unit 90, a non-volatile memory 92, the supply device 120, the power supply device 159, the density sensor 150, the operation panel 95, or the like.

The control device 80 is connected to a Central Processing Unit (CPU) 81, a Read Only Memory (ROM) 82, a Random Access Memory (RAM) 83, and an input/output interface (I/O) 84 via a bus. In addition, the CPU 81 is an example of a processor.

Here, the ROM 82 stores an image formation control program (not shown) to be executed by the CPU 81. Then, the CPU 81 reads the image formation control program (not shown) from the ROM 82 and expands the image formation control program into the RAM 83 to execute a printing process or the like by the image formation control program (not shown).

Further, the first image forming unit 30, the second image forming unit 50, the communication unit 90, and the non-volatile memory 92 are connected to the I/O 84. The communication unit 90 is an interface for mutual data communication between a terminal device such as a personal computer (not shown) and an image forming apparatus 10. The non-volatile memory 92 stores information necessary for the image forming apparatus 10 to execute the image forming operation.

The control device 80 performs various controls for forming a toner image on the intermediate transfer belt 40 (see Fig. 2 and the like) by the image forming section 32 (see Fig. 2 and the like) of each color of the first image forming unit 30. The control device 80 performs various controls for forming a toner image on the intermediate transfer belt 60 (see Fig. 2 and the like) by the image forming section 52 (see Fig. 2 and the like) of each color of the second image forming unit 50.

Further, the control device 80 controls the developing bias to be applied by the power supply device 159 to the developing rolls 39Y, 39M, 39C, 39W, 59T, 59S, 59G, and 59K (see Fig. 2 or the like) of the developing devices 36 and 56. Further, the control device 80 controls the transfer bias to be applied by the power supply device 159 to the secondary transfer rolls 24 and 25 (see Fig. 2 or the like).

In addition, the control device 80 uses the supply device 120 to control the supply timing, supply amount, and the like of each color toner of the toner cartridges 100Y, 100M, 100C, 100K, 110W, 110S, 110G, and 110K (see Fig. 3) to be supplied to the developing devices 36Y, 36M, 36C, 36K, 56W, 56S, 56G, and 56K (see Fig. 2 and the like). In addition, the control device 80 executes a mode of adjusting the misalignment of the toner image, which will be described later.

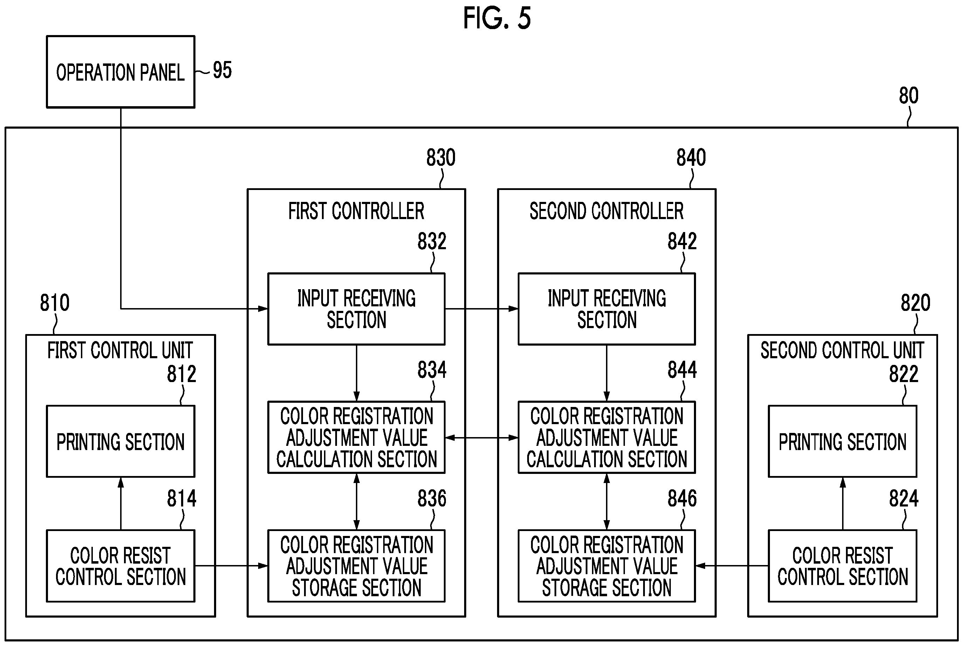

Fig. 5 is a block diagram showing an example of a functional configuration of the control device 80.

The control device 80 includes a first control unit 810 and a first controller 830 for the first image forming unit 30, a second control unit 820 and a second controller 840 for the second image forming unit 50, as a functional configuration.

The first control unit 810 and the second control unit 820 have printing sections 812 and 822 that respectively perform printing, and color resist control sections 814 and 824, respectively. The first controller 830 and the second controller 840 include input receiving sections 832 and 842, color registration adjustment value calculation sections 834 and 844, and color registration adjustment value storage sections 836 and 846, respectively.

In addition, "color registration adjustment" is a so-called color registration adjustment, which is the adjustment of misalignment in a sub-scanning direction of an image in which toner images of respective colors of Y, M, C, K1, W, S, G, and K2 formed by respective image forming sections 32 of the first image forming unit 30 and respective image forming sections 52 of the second image forming unit 50 shown in Fig. 2 are superimposed.

The input receiving sections 832 and 842 have a function of sharing the information input from the operation panel 95 between the first controller 830 and the second controller 840. Further, the input receiving sections 832 and 842 have a function of passing information, input from the operation panel 95, to the color registration adjustment value calculation sections 834 and 844.

The color registration adjustment value calculation sections 834 and 844 have a function of extracting the first adjustment values A and B, to be described later, which are currently stored from the color registration adjustment value storage sections 836 and 846. Further, the color registration adjustment value calculation sections 834 and 844 have a function of reflecting the input first adjustment values A and B in the currently stored first adjustment values A and B to set new first adjustment values A and B, and storing the new first adjustment values A and B in the color registration adjustment value storage sections 836 and 846. Further, it is determined whether or not the new first adjustment values A and B are within the range, and the second adjustment value that is out of the range, described later, is divided to calculate the adjustment amounts A and B. The color registration adjustment value storage sections 836 and 846 of the respective image forming units are notified of the divided adjustment amounts A and B to request for adjustment. Further, the color registration adjustment value calculation sections 834 and 844 have a function of calculating a color registration adjustment value to be described later at the time of printing from the first adjustment values A and B stored in the color registration adjustment value storage sections 836 and 846 and storing the color registration adjustment value in the color registration adjustment value storage sections 836 and 846.

The color registration adjustment value storage sections 836 and 846 have a function of storing the first adjustment value A, the first adjustment value B, the adjustment range, the adjustment amounts A and B, the color registration adjustment value at the time of printing, and the like.

The color resist control sections 814 and 824 read out the color registration adjustment value at the time of printing from the color registration adjustment value storage sections 836 and 846, and control the color registration at the time of printing in cooperation with the printing sections 812 and 822.

The printing sections 812 and 822 control the color registration adjustment value of each color to perform printing, in response to an instruction from the color resist control sections 814 and 824.

### [Image Forming Process]

Next, the outline of the image forming process in the image forming apparatus 10 will be described.

First, the control device 80 controls each image forming section 32 such that a toner image is formed on the intermediate transfer belt 40 of the first image forming unit 30. Similarly, each image forming section 52 is controlled such that a toner image is formed on the intermediate transfer belt 60 of the second image forming unit 50.

Specifically, the control device 80 applies a voltage to the charging members 34 and 54, and charges the surfaces of the photoconductors 33 and 53 so as to have a predetermined potential, by using the charging members 34 and 54 to which the voltage is applied. Subsequently, the control device 80 irradiates the surfaces of the photoconductors 33 and 53 charged by the charging members 34 and 54 with exposure light by the exposure devices 35 and 55 to form an electrostatic latent image, based on the image data acquired via the communication unit 90. Thus, an electrostatic latent image corresponding to the image data is formed on the surfaces of the photoconductors 33 and 53.

Next, the control device 80 develops the electrostatic latent image formed by the exposure devices 35 and 55 by the developing devices 36 and 56 and visualizes the electrostatic latent image as a toner image. Further, the control device 80 superimposes and transfers the toner image formed on the surfaces of the photoconductors 33 and 53 of each color on the intermediate transfer belts 40 and 60, by the primary transfer rolls 37 and 57.

In this way, in the first image forming unit 30, for example, a toner image on which yellow (Y), magenta (M), cyan (C), and black (K1) toners are superimposed is formed on the intermediate transfer belt 40. Similarly, in the second image forming unit 50, for example, a toner image in which black (K2), gold color (G), silver color (S), and white (W) toners are superimposed is formed on the intermediate transfer belt 60.

Here, the recording paper P sent out from the accommodating unit 12 to the conveyance path 19 by the feed roll 13 is sent out to the secondary transfer position TJ2 on the upstream side in the conveyance direction, after the convey timing is adjusted by the resist roll pair 15 based on the control of the control device 80. At the secondary transfer position TJ2, the recording paper P is conveyed between the backup roll 42 and the secondary transfer roll 24, so that the toner image on the outer peripheral surface of the intermediate transfer belt 40 is transferred to the recording paper P. Then, the recording paper P on which the toner image is transferred is conveyed to the conveyance direction downstream side and reaches the secondary transfer position TK2 on the conveyance direction downstream side.

At this time, the control device 80 adjusts the timing to start image formation such that the toner image formed on the intermediate transfer belt 60 of the second image forming unit 50 is superimposed and transferred on the toner image on the recording paper P that have been conveyed from the conveyance direction upstream side.

The recording paper P, on which the toner images of each color formed by the first image forming unit 30 and the second image forming unit 50 are superimposed and transferred, is fixed by the fixing roll pair 16 of the fixing device 18, and then is discharged to the discharge unit 9 provided on the upper part of the image forming apparatus main body 10A, by the discharge roll 17.

### [Misalignment Adjustment of Toner Image]

Next, the misalignment adjustment of the toner image will be described.

As described above, specifically, a so-called color registration adjustment, which is the adjustment of misalignment in a sub-scanning direction of an image in which toner images of respective colors of Y, M, C, K1, T, S, G, and K2 formed by respective image forming sections 32 of the first image forming unit 30 and respective image forming sections 52 of the second image forming unit 50 shown in Fig. 2 are superimposed will be described.

In addition, the color registration adjustment in the present exemplary embodiment is performed at the exposure timing of the exposure devices 35 and 55. Specifically, the misalignment is adjusted by adjusting the exposure timings of the exposure devices 35Y, 35M, 35C, 35K, 55T, 55S, 55G, and 55K.

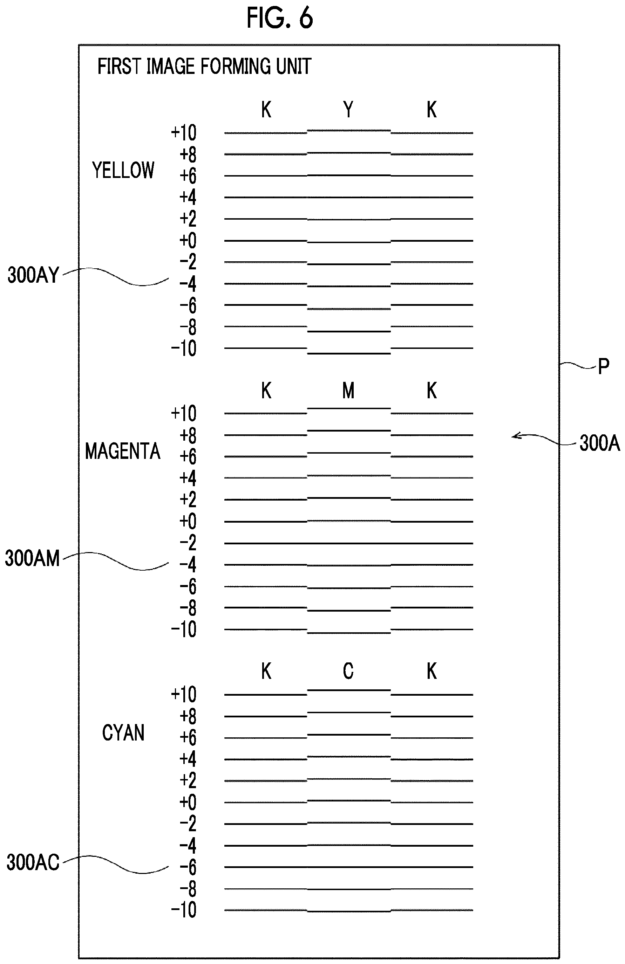

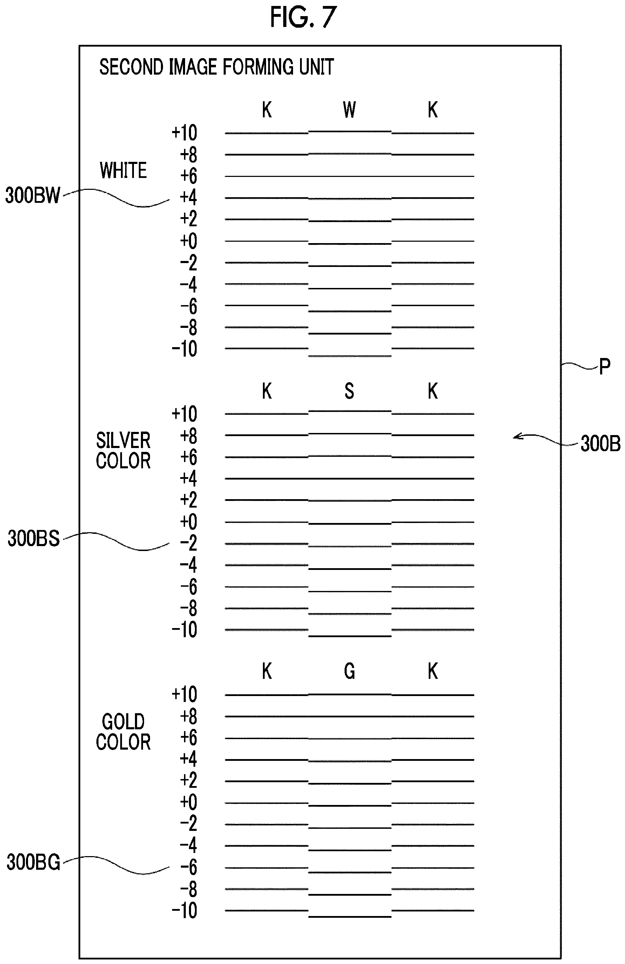

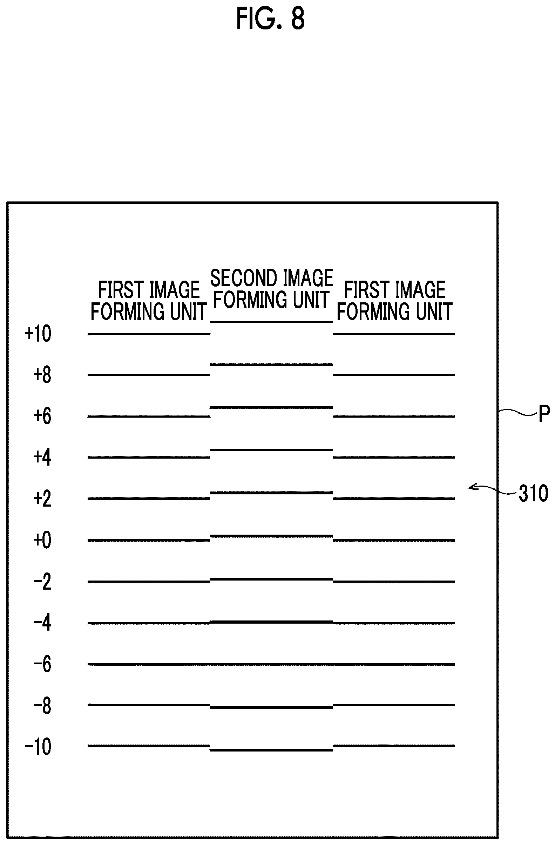

The image forming apparatus 10 shown in Fig. 2 has a misalignment adjustment mode for outputting a first chart 300A (see Fig. 6) for adjusting the misalignment of each toner image of each image forming section 32 of the first image forming unit 30, a first chart 300B (see Fig. 7) for adjusting the misalignment of each toner image of each image forming section 52 of the second image forming unit 50, and a second chart 310 (see Fig. 8) for adjusting the misalignment between the entire first image forming unit 30 and the entire second image forming unit 50 by being formed on the recording paper P, and allowing the user to visually observe the first chart 300A (see Fig. 6), the first chart 300B (see Fig. 7), and the second chart 310 (see Fig. 8) to perform misalignment adjustment. Therefore, the misalignment adjustment mode will be described in detail next.

### [Misalignment Adjustment Mode]

First, the first chart 300A shown in Fig. 6, the first chart 300B shown in Fig. 7, and the second chart 310 shown in Fig. 8 will be described.

The first chart 300A shown in Fig. 6 is a chart for adjusting the misalignment between a predetermined reference color (hereinafter referred to as "reference color") and a nonreference color in the first image forming unit 30 (see Fig. 2). Similarly, the first chart 300B shown in Fig. 7 is a chart for adjusting the misalignment between the reference color and a nonreference color in the second image forming unit 50 (see Fig. 2). Then, the second chart 310 shown in Fig. 8 is a chart for adjusting the misalignment between the reference color of the first image forming unit 30 (see Fig. 2) and the reference color of the second image forming unit 50.

In the present exemplary embodiment, the reference color of the first chart 300A shown in Fig. 6 is black (K1) formed by the image forming section 32K (see Fig. 2), and the reference color of the first chart 300B shown in Fig. 7 is black (K2) formed by the image forming section 52K (see Fig. 2). In addition, the lines on both sides in Figs. 6 and 7 are black (K1) and black (K2) which are reference colors, and the center line is a line which has color other than the reference color and for which the misalignment is adjusted.

The Y chart 300AY in the first chart 300A shown in Fig. 6 is a chart for adjusting the misalignment of the yellow (Y) formed by the image forming section 32Y with respect to the black (K1) formed by the image forming section 32K, the M chart 300AM is a chart for adjusting the misalignment of the magenta (M) formed by the image forming section 32M with respect to the black (K1) formed by the image forming section 32K, and the C chart 300AC is a chart for adjusting the misalignment of the cyan (C) formed by the image forming section 32C with respect to the black (K1) formed by the image forming section 32K. In addition, in each chart, the lines on both sides are black (K1) which is the reference color, and the center lines are the yellow (Y), magenta (M), and cyan (C) lines for which the misalignment is adjusted. The yellow (Y), magenta (M), and cyan (C) lines are actually formed of the corresponding colors.

Similarly, the W chart 300BW in the first chart 300B shown in Fig. 7 is a chart for adjusting the misalignment of the white (W) formed by the image forming section 52W with respect to the black (K) formed by the image forming section 52K, the S chart 300BS is a chart for adjusting the misalignment of the silver color (S) formed by the image forming section 52S with respect to the black (K2) formed by the image forming section 52K, and the G chart 300BG is a chart for adjusting the misalignment of the gold color (G) formed by the image forming section 52G with respect to the black (K2) formed by the image forming section 52K. In addition, in each chart, the lines on both sides are black (K2) which is the reference color, and the center lines are white (W), silver color (S), and gold color (G) lines for which the misalignment is adjusted. The white (W), silver color (S), and gold color (G) lines are actually formed of the corresponding colors.

The second chart 310 shown in Fig. 8 is a chart for adjusting the misalignment of black (K2) formed by the image forming section 52K of the second image forming unit 50 with respect to black (K1) formed by the image forming section 32K of the first image forming unit 30. In addition, the lines on both sides of the chart are lines formed by the image forming section 32K of the first image forming unit 30, and the center line is a line formed by the image forming section 52K of the second image forming unit 50.

In addition, the misalignment adjustment range of the present exemplary embodiment is -10 to +10 as described in the next of each chart. This adjustment value is intended to be easily understood by the user, and for example, "+1" does not represent a deviation of 1 mm.

### [Procedure Example]

Next, an example of a specific procedure of the misalignment adjustment mode performed by the user will be described.

### <<First Procedure Example>>

In the first procedure example, the first chart 300A (see Fig. 6) and the first chart 300B are formed on the recording paper P, and then the second chart 310 is formed on the recording paper P and output.

First, the user gives an instruction to perform the misalignment adjustment mode from the operation panel 95 (see Fig. 1). Upon receiving this instruction, the CPU 81 (see Fig. 3) of the control device 80 outputs the first chart 300A shown in Fig. 6 and the first chart 300B shown in Fig. 7 by being formed on the recording paper P. The user visually observes the charts and reads the adjustment value of the misalignment amount. Specifically, the user reads the adjustment value in which the lines of the reference color on both sides coincide with or substantially coincide with the center line of color other than the reference color.

In addition, the adjustment value read from the first chart 300A is referred to as a "first adjustment value A" for convenience, and the adjustment value read from the first chart 300B is referred to as a "first adjustment value B" for convenience.

In the case of this example, in the first chart 300A shown in Fig. 6, the first adjustment value A on the Y chart 300AY is +4, the first adjustment value A on the M chart 300AM is -2, and the C chart 300AC is used. The first adjustment value A of is -6. In addition, the notation of the first adjustment value of the first chart 300A will be described below as {K1, Y, M, C} = {0, +4, -2, -6}. In addition, since K1 is a reference color, K1 of the first adjustment value A is 0.

Similarly, in the first chart 300B shown in Fig. 7, the first adjustment value B in the W chart 300BW is +6, the first adjustment value B in the S chart 300BS is +4, and the first adjustment value B in the G chart 300BG is +8. That is, the first adjustment value B of the first chart 300B is {K2, W, S, G} = {0, +6, +4, +8}. Since K2 is the reference color, K2 of the first adjustment value B is 0.

Then, the user inputs the read first adjustment value A and first adjustment value B from the operation panel 95. Upon receiving the input, the control device 80 (see Fig. 3) outputs the second chart 310 shown in Fig. 8 by being formed on the recording paper P. The user visually observes these and reads the adjustment value. The second adjustment value in the case of this example is {K1, K2} = {0, -6}.

Then, the user inputs the adjustment value from the operation panel 95. In addition, the adjustment value read from the second chart 310 is referred to as a "second adjustment value".

With respect to the second image forming unit 50, the control device 80 adds the second adjustment value {-6} to the first adjustment value B{K2, W, S, G} = {0, +6, +8, +4}, and corrects the first adjustment value B into {K2, W, S, G} = {-6, 0, +2, -2}. In addition, for the first image forming unit 302, the first adjustment value A{K1, Y, M, C} = {0, +4, -2, -6} remains.

Next, the control device 80 checks that the corrected first adjustment values B{K2, W, S, G} = {-6, 0, +2, -2} of the second image forming unit 50 are all within the range of the adjustment amount, that is, within -10 to +10. Since this example is within the range, the first adjustment values A{K1, Y, M, C} = {0, +4, -2, -6} of the first image forming unit 30 and the second image forming unit 50 are reflected in the color registration adjustment value based on the first adjustment value B {K2, W, S, G} = {-6,0, +2, -2}.

Next, an example in a case where the corrected second adjustment amount B of the second image forming unit 50 is out of the range, that is, does not fall within -10 to +10 will be described.

For example, assume that the first adjustment value B read from the first chart 300B is {K2, W, S, G} = {0, -2, +4, -8}. In addition, other than this, the same as the above example. Then, the user inputs the second adjustment value B from the operation panel 95.

With respect to the second image forming unit 50, the control device 80 adds the second adjustment value {-6} to the first adjustment value B {K2, W, S, G} = {0, -2, +4, -8}, and corrects the first adjustment value B into {K2, W, S, G} = {-6, -8, -2, -14}. The control device 80 checks that the corrected first adjustment values B{K2, W, S, G} = { -6, -8, -2, -14} of the second image forming unit 50 are all within the range of the adjustment amount, that is, within -10 to +10.

Since the adjustment values are out of range in the present example, the control device 80 calculates an adjustment amount that is within the range, that is, an adjustment amount that can be adjusted by the second image forming unit 50. Specifically, the first adjustment value B outside the original range is subtracted from the threshold value of the range. In this example, {-2} obtained by subtracting the second adjustment value B{-8} of G from the threshold value {-10} in the range is the adjustable adjustment amount. In addition, this adjustment amount is referred to as "adjustment amount B".

In addition, the control device 80 calculates an adjustment amount that cannot be completely adjusted by the second image forming unit 50. In the present example, {+4} obtained by subtracting {-6} from this {-2} is the adjustment amount. In addition, this adjustment amount is referred to as "adjustment amount A".

Then, with respect to the second image forming unit 50, the control device 80 adds the adjustment amount {-2} to the first adjustment value B{K2, W, S, G} = {0, -2, +4, -8}, and corrects the first adjustment value B into {K2, W, S, G} = {-2, -4, +2, -10}. Further, with respect to the first image forming unit 30, the adjustment amount A{+4} to the first adjustment value A{K1, Y, M, C} = {0, +4, -2, -6}, and the first adjustment value A is corrected into {K1, Y, M, C} = {+4, +8, +2, -2}.

Explaining from another viewpoint, the second adjustment value {-6} is divided into "adjustment amount A {+2}" to be reflected in the first adjustment value A of the first image forming unit 30 and "adjustment amount B{-2}" to be reflected in the first adjustment value B of the second image forming unit 50.

The control device 80 checks that the corrected first adjustment values {K1, Y, M, C} = {+4, +8, +2, -2} of the first image forming unit 30 are all within the range of the adjustment amount, that is, within -10 to +10. In the present example, the corrected final first adjustment values A{K1, Y, M, C} = {+4, +8, +2, -2} of the first image forming unit 30 and the corrected first adjustment values B{K2, W, S, G} = {-2, -4, +2, -10} of the second image forming unit 50 are reflected in the color registration adjustment value.

In addition, in a case where any of the corrected first adjustment values A of the first image forming unit 30 is out of the range, color that cannot be adjusted and the adjustment amount are displayed on the operation panel 95. In addition, the adjustment amount that cannot be adjusted is referred to as the "remaining adjustment amount". For example, in a case where the first adjustment value A{K1, Y, M, C} = {+4, +12, +2, -2}, the color that cannot be adjusted is Y, and {+2} is obtained by subtracting {+10} from {+12} is the remaining adjustment amount. Further, the first adjustment value A is corrected within the range, that is, the first adjustment value A is corrected to {K1, Y, M, C} = {+4, +10, +2, -2}.

In the present exemplary embodiment, after the misalignment adjustment is completed, the control device 80 outputs the first charts 300A and 300B and the second chart 310 for which color registration adjustment is performed by being formed on the recording paper P. The user sees these and checks that the color registration adjustment is performed.

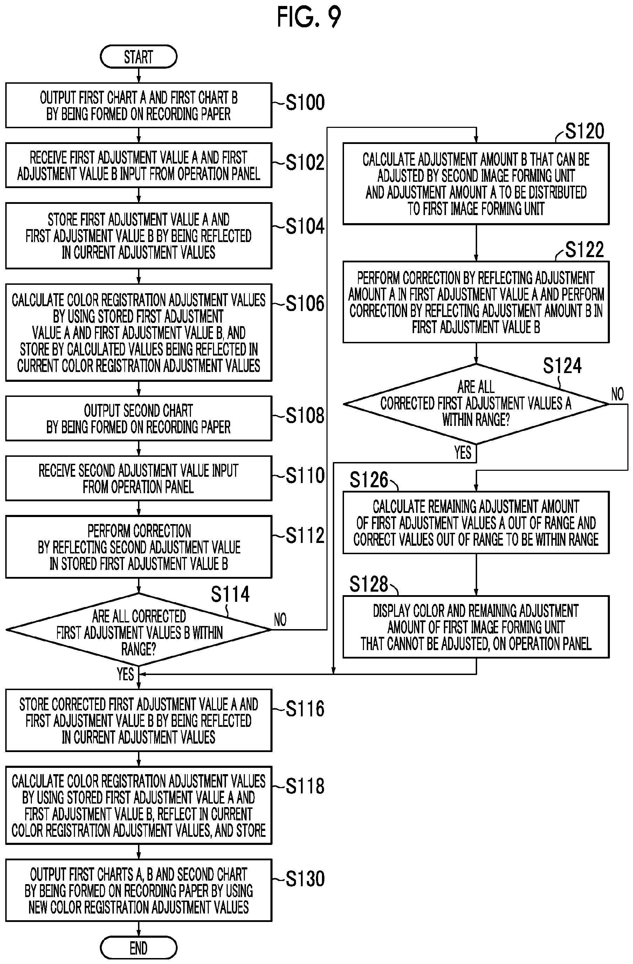

Next, the first procedure example will be described using the flowchart of Fig. 9.

In the present procedure example, the first chart 300A (see Fig. 6) and the first chart 300B are formed on the recording paper P, and then the second chart 310 is formed on the recording paper P and output.

Upon receiving an instruction to perform the misalignment adjustment mode from the operation panel 95 (see Fig. 1) operated by the user, the CPU 81 outputs the first chart 300A (see Fig. 6) and the first chart 300B (see Fig. 7) by being formed on the recording paper P (step S100). The CPU 81 receives the first adjustment value A of color other than the reference color of the first image forming unit 30 and the first adjustment value B of color other than the reference color of the second image forming unit 50, which are read and input from the operation panel 95 by the user (step S102).

The CPU 81 stores the received first adjustment values A and B by being reflected in the current first adjustment values A and B (step S104). The CPU 81 calculates the color registration adjustment values of the first image forming unit 30 and the second image forming unit 50 from the first adjustment value A of the first image forming unit 30 and the first adjustment value B of the second image forming unit 50, which are stored, and stores the calculated values by being reflected in the current color registration adjustment values (step S106).

In addition, as described above, the "color registration adjustment value" is an exposure timing adjustment value of the exposure devices 35Y, 35M, 35C, 35K, 55W, 55S, 55G, and 55K at the time of image formation calculated from the first adjustment values A and B.

The CPU 81 outputs the second chart 310 (see Fig. 8) by being formed on the recording paper P (step S108). The CPU 81 receives the second adjustment value of the reference color of the second image forming unit 50 with respect to the reference color of the first image forming unit 30 read by the user and input from the operation panel 95 (step S110). The CPU 81 performs correction by reflecting the input second adjustment value in the first adjustment value B of the second image forming unit 50 (step S112). The CPU 81 determines whether or not all the corrected first adjustment values B of the second image forming unit 50 are within the range (step S114).

In a case where all the corrected first adjustment values B are within the range (step S114: YES), the CPU 81 proceeds to the process of step S116, and stores the corrected first adjustment value A and first adjustment value B by being reflected in the current first adjustment value A and first adjustment value B (step S116). The CPU 81 calculates the color registration adjustment values of the first image forming unit 30 and the second image forming unit 50 from the first adjustment value A of the first image forming unit 30 and the first adjustment value B of the second image forming unit 50, which are stored, and stores the color registration adjustment values by being reflected in the current color registration adjustment values (step S118).

The CPU 81 outputs the first charts 300A and 300B and the second chart 310 by being formed on the recording paper P based on the new color registration adjustment value (step S130).

In a case where all the corrected first adjustment values B are out of the range (step S114: NO), the process proceeds to step S120, and the adjustment amount B that is out of the range and can be adjusted by the second image forming unit 50 is calculated (step S120). In addition, in a case where for a plurality of colors, the adjustment amounts are out of the range, the maximum amount is defined as the adjustment amount B. Further, the adjustment amount A to be distributed to the first image forming unit 30 is calculated from the adjustment amount B.

Here, in the above example, {-2} obtained by subtracting {-8} from the threshold value {-10} of the range is the adjustment amount B of the second image forming unit 50, and {+4} obtained by subtracting {-6} from the threshold value {-2} is the adjustment amount A of the first image forming unit 30.

The CPU 81 performs correction by reflecting the calculated adjustment amounts A and B in the first adjustment value A of the first image forming unit 30 and the first adjustment value B of the second image forming unit 50 (step S122). The CPU 81 determines whether or not all the corrected first adjustment values A are within the range (step S124).

In a case where all the corrected first adjustment values A are within the range (step S124: YES), the CPU 81 proceeds to the process of step S116, reflects and stores the corrected first adjustment value A and first adjustment value B (step S116), calculates, reflects and stores the color registration adjustment value (step S118), and outputs first charts 30A and 300B and the second chart 310 by being formed on the recording paper P (step S130).

In a case where all the corrected first adjustment values A are out of the range (step S124: NO), the CPU 81 proceeds to the process of step S126, calculates a remaining adjustment amount that cannot be adjusted, and corrects the first adjustment values A, which are out of the range, to be within the range.

Here, the "remaining adjustment amount" and the "correction of the first adjustment value A" will be described. For example, in a case where the first adjustment value A is {0, 0, +10, +12}, {+2} of {+12}, which is out of the range, is the "remaining adjustment amount", and "correction of the first adjustment value A" is {0, 0, +10, +10}.

The CPU 81 displays, on the operation panel 95, the color for which misalignment cannot be adjusted and the remaining adjustment amount of the first image forming unit 30 (step S128), and proceeds to the process of step S116.

The CPU 81 reflects and stores the corrected first adjustment value A and first adjustment value B (step S116), calculates, reflects and stores the color registration adjustment value (step S118), and outputs the first charts 30A and 300B and the second chart 310 by being formed on the recording paper P (step S130).

### <<Second Procedure Example>>

In the present procedure example, the second chart 310 is formed on the recording paper P and output, and then the first chart 300A (see Fig. 6) and the first chart 300B are formed on the recording paper P and output. In addition, the first chart 300A shown in Fig. 6, the first chart 300B shown in Fig. 7, and the second chart 310 shown in Fig. 8 are the same. Further, the definitions of the first adjustment value A, the first adjustment value B, the second adjustment value, the adjustment amount A, the adjustment amount B, and the remaining adjustment amount are the same.

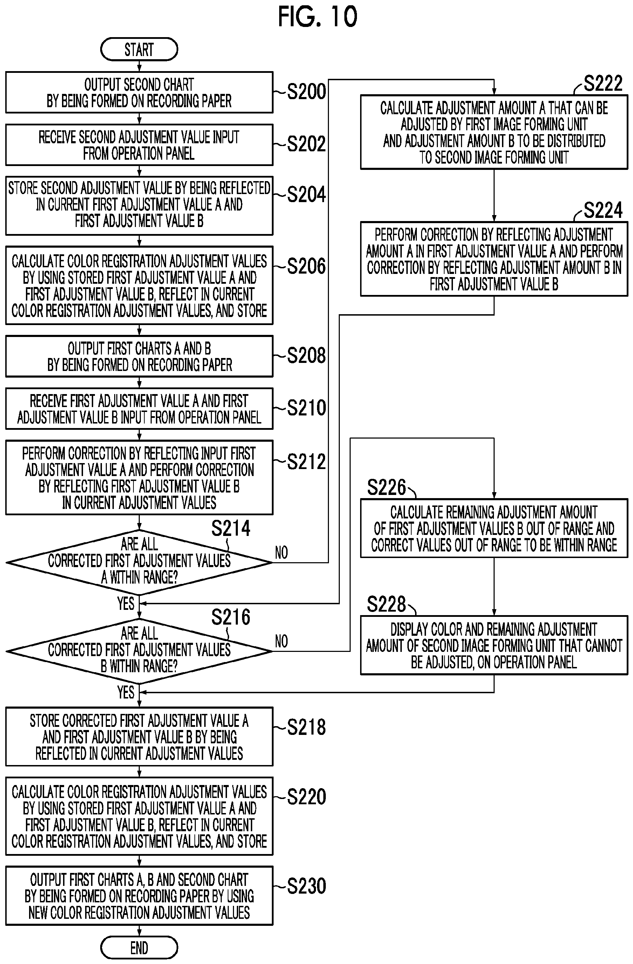

The second procedure will be described with reference to the flowchart of Fig. 10. In addition, the steps and the like similar to the first procedure will be described in a simplified manner.

Upon receiving an instruction to perform the misalignment adjustment mode from the operation panel 95 (see Fig. 1) operated by the user, the CPU 81 outputs the second chart 310 (see Fig. 8) by being formed on the recording paper P (step S200). The CPU 81 receives the second adjustment value of the reference color of the second image forming unit 50 with respect to the reference color of the first image forming unit 30 read by the user and input from the operation panel 95 (step S202).

The CPU 81 stores the received second adjustment value by being reflected in the first adjustment value A of the current first image forming unit 30 and the first adjustment value B of the second image forming unit 50 (step S204).

The CPU 81 calculates the color registration adjustment values of the first image forming unit 30 and the second image forming unit 50 from the stored first adjustment values A and B of the first image forming unit 30 and the second image forming unit 50, which are stored, and stores the calculated values by being reflected in the current color registration adjustment value (step S206).

The CPU 81 outputs the first chart 300A and the first chart 300B by being formed on the recording paper P (step S208). The CPU 81 receives the first adjustment value A for the reference color of the first image forming unit 30 and the first adjustment value B of color other than the reference color of the second image forming unit 50, which is read by the user and input from the operation panel 95 (step S210).

The CPU 81 makes corrections by reflecting the received first adjustment values A and B in the current first adjustment values A and B (step S212). The CPU 81 determines whether or not all of the corrected first adjustment values A are within the range (step S214). In a case where all of the corrected first adjustment values A are within the range (step S214: YES), the CPU 81 proceeds to the process of step S216.

The CPU 81 determines whether or not all of the corrected first adjustment values B are within the range (step S216). In a case where the values are within the range (step S216: YES)), the CPU 81 proceeds to the process of step S218.

The CPU 81 reflects and stores the first adjustment values A and B (step S218). The CPU 81 calculates the color registration adjustment values of the first image forming unit 30 and the second image forming unit 50 from the stored first adjustment value A of the first image forming unit 30 and the first adjustment value B of the second image forming unit 50, which are stored, and stores the calculated values by being reflected in the current color registration adjustment values (step S220).

The CPU 81 outputs the first charts 300A and 300B and the second chart 310 by being formed on the recording paper P according to the new color registration adjustment value (step S230).

In a case where all of the corrected first adjustment values A are out of the range in step S214 (step S214: NO), the process proceeds to step S222 and the adjustment amount A is calculated. In addition, in a case where for a plurality of colors, the adjustment amounts are out of the range, the maximum amount is defined as the adjustment amount A. Further, the adjustment amount B of the second image forming unit 50 is calculated from the adjustment amount A of the first image forming unit 30 (step S222).

The CPU 81 corrects the calculated adjustment amounts A and B by being reflected in the first adjustment value of the first image forming unit 30 and the first adjustment values A and B of the second image forming unit 50 (step S224), and proceeds to step S216.

In a case where the values are out of the range in step S216 (step S216: NO), the CPU 81 proceeds to the process of step S226, calculates a remaining adjustment amount that cannot be adjusted, and corrects the first adjustment values A, which are out of the range, to be within the range.

The CPU 81 displays, on the operation panel 95, the color for which misalignment cannot be adjusted and the remaining adjustment amount of the second image forming unit 50 (step S228), and proceeds to the process of step S218.

The CPU 81 reflects and stores the corrected first adjustment value A and first adjustment value B (step S218), calculates, reflects and stores the color registration adjustment value (step S220), and outputs the first charts 300A and 300B and the second chart 310 by being formed on the recording paper P (step S230).

### <<Third Procedure Example>>

In the third procedure example, the user is inquired about the image forming unit for which misalignment adjustment is prioritized and whether or not to divide the remaining adjustment amount. The first chart 300A shown in Fig. 6, the first chart 300B shown in Fig. 7, and the second chart 310 shown in Fig. 8 are the same. Further, the definitions of the first adjustment value A, the first adjustment value B, the second adjustment value, the adjustment amount A, the adjustment amount B, and the remaining adjustment amount are the same.

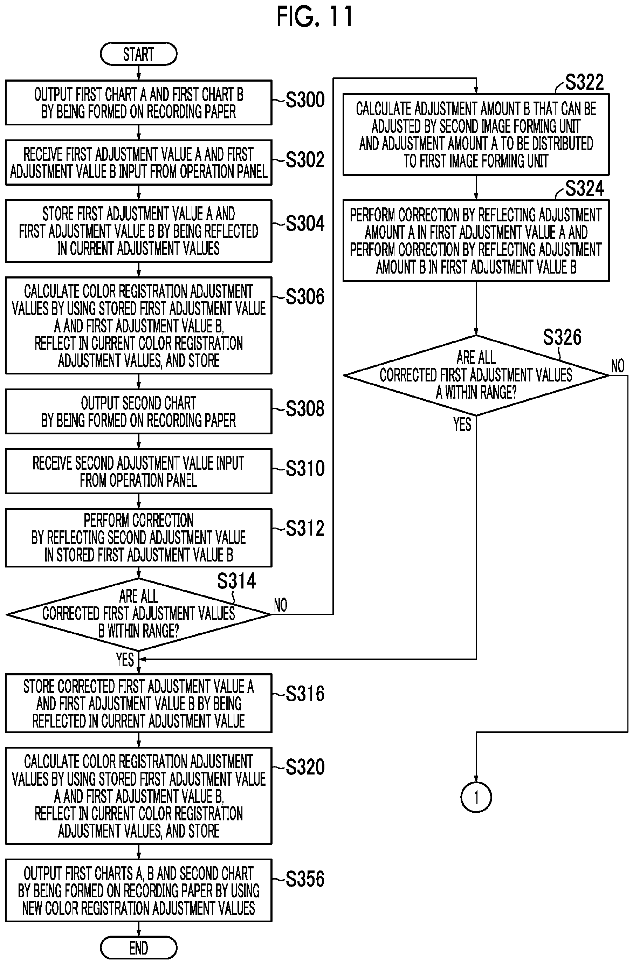

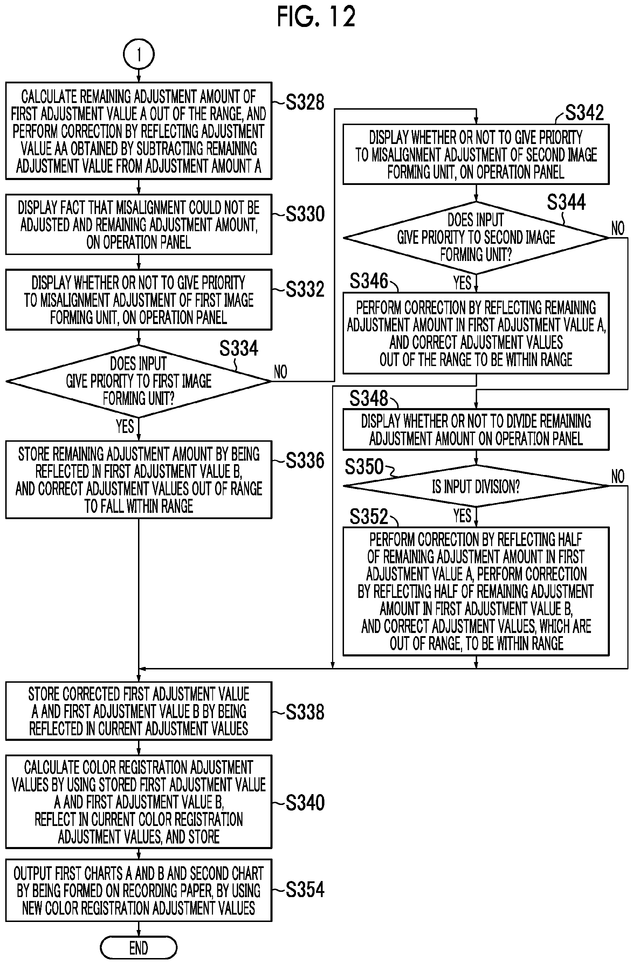

The third procedure example will be described with reference to the flowcharts of Figs. 11 and 12. In addition, since steps up to step S324 are the same as the steps up to step S124 of the first procedure example in Fig. 9, the description will be simplified. Further, steps and the like similar to the first procedure example and the second procedure example will be described in a simplified manner.

Further, the "image forming unit for which misalignment adjustment is prioritized" to be described later is to select an image forming unit that does not have an image forming section for which the misalignment adjustment cannot be performed. In other words, the user selects one of the first image forming unit 30 and the second image forming unit 50, in which all the image forming units are adjusted.

Upon receiving an instruction to perform the misalignment adjustment mode from the operation panel 95 (see Fig. 1) operated by the user, the CPU 81 outputs the first chart 300A (see Fig. 6) and the first chart 300B (see Fig. 7) by being formed on the recording paper P (step S300). The CPU 81 receives the first adjustment values A and B read by the user and input from the operation panel 95 (step S302).

The CPU 81 reflects and stores the received first adjustment values A and B in the current first adjustment values A and B (step S304). The CPU 81 calculates the color registration adjustment values of the first image forming unit 30 and the second image forming unit 50 from the stored first adjustment value A and first adjustment value B, and stores the calculated values by being reflected in the current color registration adjustment values (step S306).

The CPU 81 outputs the second chart 310 (see Fig. 8) by being formed on the recording paper P (step S308). The CPU 81 receives the second adjustment value read by the user and input from the operation panel 95 (step S310). The CPU 81 corrects the input second adjustment value by being reflected in the first adjustment value B (step S312). The CPU 81 determines whether or not all the corrected first adjustment values B of the second image forming unit 50 are within the range (step S314).

In a case where all the corrected first adjustment values B are within the range (step S314: YES), the CPU 81 proceeds to the process of step S316, and reflects and stores the corrected first adjustment values A and B (S316).

The CPU 81 calculates, reflects, and stores the color registration adjustment values of the first image forming unit 30 and the second image forming unit 50 from the stored first adjustment value A and first adjustment value B (step S320), and outputs the first charts 300A and 300B and the second chart 310 by being formed on the recording paper P (step S356).

In a case where the adjustment values are out of the range (step S314: NO), the process proceeds to step S322, and the adjustment amount B that can be adjusted by the second image forming unit 50 that is out of the range is calculated (step S322). In addition, in a case where for a plurality of colors, the adjustment amounts are out of the range, the maximum amount is defined as the adjustment amount B. Further, the adjustment amount A to be distributed to the first image forming unit 30 is calculated from the adjustment amount B. The CPU 81 makes corrections by reflecting the calculated adjustment amounts A and B in the first adjustment values A and B (step S324).

The CPU 81 determines whether or not all the corrected first adjustment values A are within the range (step S326).

In a case where all the corrected first adjustment values A are within the range (step S326: YES), the CPU 81 proceeds to the process of step S316, reflects and stores the corrected first adjustment value A and first adjustment value B (step S316), and calculates and reflects the color registration adjustment value (step S320).

In a case where all the corrected first adjustment values A are out of the range (step S326: NO), the CPU 81 proceeds to the process of step S328 of Fig. 12, calculates the remaining adjustment amount of the first adjustment value A that is out of the range, and performs correction by reflecting the adjustment amount AA obtained by subtracting the remaining adjustment amount from the adjustment amount A (step S328).

The CPU 81 displays a fact that the misalignment cannot be adjusted and the remaining adjustment amount, on the operation panel 95 (step S330).

The CPU 81 displays a question as to whether or not to give priority to the misalignment adjustment of the first image forming unit 30, on the operation panel 95 (step S332).

The process proceeds to step S334, and the response of the user is accepted as an input. In a case where the user input gives priority to the first image forming unit 30 (step S334: YES), the CPU 81 proceeds to the process of step S336, and stores the remaining adjustment amount by being reflected in the first adjustment value B of the second image forming unit 50 (step S336). In addition, at this time, the first adjustment values B of the second image forming unit 50, which are out of the range, are corrected to be within the range.

The CPU 81 reflects and stores the corrected first adjustment values A and B (step S338). The CPU 81 calculates, reflects, and stores the color registration adjustment values of the first image forming unit 30 and the second image forming unit 50 from the stored first adjustment values A and B of the first image forming unit 30 and the second image forming unit 50 (step S340), and outputs the first charts 300A and 300B and the second chart 310 by being formed on the recording paper P (step S354).

In a case where the user input does not give priority to the first image forming unit 30 (step S334: NO), the CPU 81 proceeds to the process of step S342. The CPU 81 displays a question as to whether or not to give priority to the misalignment adjustment of the second image forming unit 50, on the operation panel 95 (step S342).

In a case where the user input gives priority to the second image forming unit 50 (step S344: YES), the CPU 81 proceeds to the process of step S346 and performs correction by reflecting the remaining adjustment amount in the first adjustment value A of the first image forming unit 30 (step S346). In addition, at this time, the first adjustment values A, which are out of the range, are corrected to be within the range.

The CPU 81 reflects and stores the corrected first adjustment values A and B (step S338). The CPU 81 calculates, reflects, and stores the color registration adjustment values of the first image forming unit 30 and the second image forming unit 50 from the stored first adjustment values A and B of the first image forming unit 30 and the second image forming unit 50 (step S340), and outputs the first charts 300A and 300B and the second chart 310 by being formed on the recording paper P (step S354).

In a case where the user input does not give priority to the second image forming unit 50 (step S344: NO), the CPU 81 proceeds to the process of step S348 and displays a question as to whether or not to perform division on the operation panel 95 (step S348).

The process proceeds to step S350, and the user's response is received as an input. In a case where the user input is division (step S350: YES), the CPU 81 proceeds to the process of step S352, performs correction by reflecting half of the remaining adjustment amount in the first adjustment value A of the first image forming unit 30, and performs correction by reflecting half of the remaining adjustment amount in the first adjustment value B of the second image forming unit 50 (step S352). In addition, at this time, the first adjustment values A and B, which are out of the range, are corrected to be within the range.

The CPU 81 reflects and stores the corrected first adjustment values A and B (step S338). The CPU 81 calculates, reflects, and stores the color registration adjustment values of the first image forming unit 30 and the second image forming unit 50 from the stored first adjustment values A and B of the first image forming unit 30 and the second image forming unit 50 (step S340), and outputs the first charts 300A and 300B and the second chart 310 by being formed on the recording paper P (step S354).

In a case where the user input is non-division (step S350: NO), the CPU 81 proceeds to step S338.

The CPU 81 reflects and stores the corrected first adjustment values A and B (step S338). The CPU 81 calculates the color registration adjustment values of the first image forming unit 30 and the second image forming unit 50 from the stored first adjustment values A and B of the first image forming unit 30 and the second image forming unit 50, and stores the calculated values by being reflected in the current color registration adjustment values (step S354).

### [Action]

Next, the action of the present exemplary embodiment will be described.

In the image forming apparatus 10 of the present exemplary embodiment, the first charts 300A and 300B for respectively adjusting the misalignment between the toner image of the reference color and the toner images of colors other than the reference color in the first image forming unit 30 and the second image forming unit 50, and the second chart 310 for adjusting the misalignment between the reference color of the first image forming unit 30 and the reference color of the second image forming unit 50 is formed on the recording paper P and output. Therefore, it is possible to adjust the misalignment of the toner images between the first image forming unit 30 and the second image forming unit 50.

Further, in the procedure example 1 and the procedure example 3, after the first charts 300A and 300B are formed on the recording paper P and output and the first adjustment values A and B are input, the second chart 310 is output by being formed on the recording paper P and the first adjustment value is input. Therefore, an input error by the user may be reduced as compared with a case where the first adjustment values A and B and the second adjustment value are input after both the first charts 300A and 300B and the second chart 310 are output.

Further, in the procedure example 1 and the procedure example 3, the misalignment of the image forming section 32 of the first image forming unit 30 is adjusted by using the first adjustment value A, and the misalignment of the image forming section 52 of the second image forming unit 50 is adjusted by using the first adjustment value B. Then, using the second adjustment value, the misalignment of each image forming section 52 including the reference color of the second image forming unit 50 is readjusted. Therefore, as compared with a case where only the misalignment of the image forming section 52K of the reference color of the second image forming unit 50 is readjusted, the misalignment of the toner image of the image forming section 52 of a color other than the color of the image forming section 52 is also adjusted.

Further, in the second procedure example, after the second chart 310 is formed on the recording paper P and output, and the first adjustment value is input, the first charts 300A and 300B are formed on the recording paper P and output, and the first adjustment values A and B are input. Therefore, an input error by the user may be reduced as compared with a case where the first adjustment values A and B and the second adjustment value are input after both the first charts 300A and 300B and the second chart 310 are output.

Further, in the second procedure example, the misalignment between the reference image forming section 32K of the first image forming unit 30 and the reference image forming section 52K of the second image forming unit 50 is adjusted using the second adjustment value. Then, the misalignment of the other image forming sections 32Y, 32M, and 32C with respect to the reference image forming section 32K of the first image forming unit 30 is adjusted by using the first adjustment value A, and the misalignment of the other image forming sections 52W, 52S, and 52GC with respect to the reference image forming section 52K of the second image forming unit 50 is adjusted by using the first adjustment value B. Therefore, the misalignment between the reference image forming section 32K of the first image forming unit 30 and the reference image forming section 52K of the second image forming unit 50 is adjusted using the second adjustment value. Therefore, as compared with a case where only the misalignment between the reference image forming section 32K of the first image forming unit 30 and the reference image forming section 52K of the second image forming unit 50 is adjusted, the misalignment of the toner images of the image forming sections 32Y, 32M, 32C, 52W, 52S, and 52G other than the reference image forming sections 32K and 52K is adjusted.

Further, in the first procedure example, the second procedure example, and the third procedure example, in a case where there is an image forming section for which the misalignment adjustment cannot be performed by reflecting the second adjustment value, the second adjustment value is divided, distributed to, and reflected in the first image forming unit 30 and the second image forming unit 50. Therefore, it is possible to adjust the misalignment of a large number of image forming sections, as compared with a case where the second adjustment value is not divided.

Further, in the third procedure example, it is possible to specify which of the first image forming unit 30 and the second image forming unit 50 has priority for the misalignment adjustment. Therefore, the user may perform a desired misalignment adjustment.

Further, in the first procedure example, the second procedure example, and the third procedure example, after the first adjustment values A and B and the second adjustment value are input, the first charts 300A and 300B and the second chart 310 are formed again, and are formed on the recording paper P and output. Therefore, the result of the misalignment adjustment may be accurately confirmed, as compared with a case where both the first charts 300A and 300B and the second chart 310 are not output.

### <Others>

The present invention is not limited to the above exemplary embodiments.

For example, in the third procedure example of the above exemplary embodiment, correction is made by reflecting half of the remaining adjustment amount in the first adjustment value A of the first image forming unit 30, and correction is made by reflecting half of the remaining adjustment amount in the first adjustment value B of the second image forming unit 50, but the present invention is not limited to this. The division amount of the remaining adjustment amount may be changed in the first image forming unit 30 and the second image forming unit 50. At this time, the division amount applied to the first image forming unit 30 and the division amount applied to the second image forming unit 50 may be inquired to the user and input.

Further, for example, in the above exemplary embodiment, in the first procedure example and the third procedure example, after the first charts 300A and 300B are formed on the recording paper P and output and the first adjustment values A and B are input, the second chart 310 is formed on the recording paper P and output and the second adjustment value is input. In the second procedure example, after the second chart 310 is formed on the recording paper P and output and the second adjustment value is input, the first charts 300A and 300B are formed on the recording paper P and output and the first adjustment values A and B are input. However, the present invention is not limited to these procedures. For example, after all the first charts 300A and 300B and the second chart 310 are formed on the recording paper P and output, the first adjustment values A and B and the second adjustment value may be input.

Further, the first charts 300A and 300B and the second chart 310 shown in Fig. 6 are examples, and the present invention is not limited thereto.

Further, for example, in the above exemplary embodiment, the user inputs an instruction for executing the misalignment adjustment mode, and gives a priority to the image forming unit from the operation panel 95, but the present invention is not limited thereto. For example, the user may input from a personal computer, a smartphone, a tablet terminal, or the like that is electrically connected to the image forming apparatus 10 by wire or wireless.

Further, for example, in the exemplary embodiment, in the image forming apparatus 10, the first image forming unit 30 and the second image forming unit 50 have the same color only for the black toner image, but the present invention is not limited thereto. For example, all four colors may be the same, and for example, both the first image forming unit 30 and the second image forming unit 50 may have four colors of Y, M, C, and K. Alternatively, all four colors may be different. As an example, the second image forming unit 50 of the above exemplary embodiment may have a color other than black, for example, a transparent color.

Further, for example, in the above exemplary embodiments, the image forming apparatus 10 includes two image forming units, that is, the first image forming unit 30 and the second image forming unit 50, but the present invention is not limited thereto. The image forming apparatus may include three or more image forming units. Further, for example, in the above exemplary embodiments, the first image forming unit 30 and the second image forming unit 50 have four image forming sections 32 and 52, respectively, but the present invention is not limited thereto. The image forming unit may have two or more image forming sections.

Here, the second adjustment value in the case of an image forming apparatus including three or more image forming units will be described. One image forming unit as a reference is determined, and the second adjustment value is read for each of the other image forming units with respect to the reference image forming unit. That is, there is a second adjustment value for each of the other plurality of image forming units.

Further, various types of control by the control device 80 may be read as a mode or a control form.

Further, in the above exemplary embodiments, the recording paper P is used as an example of the recording medium, but the present invention is not limited thereto. Other than the recording paper P, for example, an OHP sheet or the like may be used.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device). In the embodiments above, the term "processor" is broad enough to encompass one processor or plural processors in collaboration which are located physically apart from each other but may work cooperatively. The order of operations of the processor is not limited to one described in the embodiments above, and may be changed. More specifically, the hardware structure of these various processors is an electric circuit in which circuit elements such as semiconductor elements are combined.

In the above exemplary embodiment, the mode in which the program is stored (installed) in the ROM or the storage in advance has been described, but the present invention is not limited to this. The program may be provided in a form recorded on a Compact Disk Read Only Memory (CD-ROM), a Digital Versatile Disk Read Only Memory (DVD-ROM), a Universal Serial Bus (USB) memory, or the like. Further, the program may be downloaded from an external apparatus via a network.

Further, the configuration of the image forming apparatus is not limited to the configuration of the above exemplary embodiments, and various configurations can be used. Further, the present invention can be implemented in various ways without departing from the concept of the present invention.

### [Supplementary Note]

(((1))) An image forming apparatus comprising:
   a plurality of image forming units each having a plurality of image forming sections, and an intermediate transfer body on which toner images formed by the plurality of image forming sections are primarily transferred;
   a plurality of secondary transfer units that are provided corresponding to the plurality of the image forming units, and secondarily transfer the toner images of the intermediate transfer body to a recording medium; and
   a processor configured to:
      in response to an instruction for adjusting misalignment of the toner images,
      execute a mode in which a first chart for checking amounts of misalignment between a toner image formed by a reference image forming section and the toner images formed by another image forming section, for each image forming unit, and a second chart for checking amounts of misalignment between toner images formed by the reference image forming sections of the plurality of image forming units are secondarily transferred to the recording medium and output, and an input of a first adjustment value for adjusting misalignment for each image forming unit, read from the first chart, and an input of a second adjustment value for adjusting misalignment between the image forming units, read from the second chart, are received.
(((2))) The image forming apparatus according to (((1))),
   wherein in the mode,
   after the first chart is secondarily transferred to the recording medium and output to receive the input of the first adjustment value,
   the second chart is secondarily transferred to the recording medium and output to receive the input of the second adjustment value.
(((3))) The image forming apparatus according to (((2))),
   wherein in the mode,
   misalignment of the plurality of the image forming sections of each image forming unit is adjusted by using the first adjustment value, and
   misalignment of each of the plurality of image forming sections of the plurality of the image forming units is adjusted by using the second adjustment value.
(((4))) The image forming apparatus according to (((1))),
   wherein in the mode,
   after the second chart is secondarily transferred to the recording medium and output to receive the input of the second adjustment value,
   the first chart is secondarily transferred to the recording medium and output to receive the input of the first adjustment value.
(((5))) The image forming apparatus according to (((4))),
   wherein in the mode,
   misalignment between the reference image forming sections of the plurality of image forming units is adjusted by using the second adjustment value, and
   misalignment of another image forming section with respect to the reference image forming sections of the plurality of image forming units is adjusted by using the first adjustment value.
(((6))) The image forming apparatus according to (((3))) or (((5))),
   wherein in the mode,
   in a case where there is an image forming section for which misalignment is not to be adjusted by reflecting the second adjustment value,
   the second adjustment value is divided and reflected in the plurality of the image forming units.
(((7))) The image forming apparatus according to (((6))), wherein in the mode,
   in a case where there is an image forming section for which the misalignment is not to be adjusted even by dividing and reflecting the second adjustment value,
   the image forming unit that does not have the image forming section, for which the misalignment is not to be adjusted, is selected.
(((8))) The image forming apparatus according to any one of (((1))) to (((7))),
   wherein in the mode,
   after the input of the first adjustment value and the input of the second adjustment value are received,
   the first chart and the second chart are formed again, secondarily transferred to the recording medium, and output.

According to the image forming apparatus of the aspect of the invention according to (((1))), it is possible to adjust the misalignment of the toner images between the image forming units.

According to the image forming apparatus of the aspect of the invention according to (((2))), an input error can be reduced as compared with a case where the first adjustment value and the second adjustment value are input after both the first chart and the second chart are output.

According to the image forming apparatus of the aspect of the invention according to (((3))), the misalignment of the toner images of image forming sections other than the reference image forming section is adjusted, as compared with a case where only the misalignment of the reference image forming section of the plurality of image forming units is adjusted again.

According to the image forming apparatus of the aspect of the invention according to (((4))), an input error can be reduced as compared with a case where the first adjustment value and the second adjustment value are input after both the first chart and the second chart are output.

According to the image forming apparatus of the aspect of the invention according to (((5))), the misalignment of the toner images of image forming sections other than the reference image forming section is adjusted, as compared with a case where only the misalignment of the reference image forming section of the plurality of image forming units is adjusted.

According to the image forming apparatus of the aspect of the invention according to (((6))), it is possible to adjust the misalignment of a large number of image forming sections, as compared with a case where the second adjustment value is not divided.

According to the image forming apparatus of the aspect of the invention according to (((7))), desired misalignment adjustment can be performed, as compared with a case where an image forming unit without having an image forming section for which the misalignment cannot be adjusted is fixed.

According to the image forming apparatus of the aspect of the invention according to (((8))), the result of the misalignment adjustment can be accurately checked, as compared with a case where both the first chart and the second chart are not output.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: image forming apparatus
30: first image forming unit
32Y: image forming section
32C: image forming section
32M: image forming section
32K: image forming section
40: intermediate transfer belt (example of intermediate transfer body)
50: second image forming unit
50W: image forming section
52S: image forming section
52G: image forming section
52K: image forming section
60: intermediate transfer belt (example of intermediate transfer body)
74: secondary transfer unit (example of transfer unit)
76: secondary transfer unit (example of transfer unit)
80: control device
81: CPU (example of processor)
300A: first chart
300B: first chart
310: second chart
P: recording paper (example of recording medium)

## Claims

1. An image forming apparatus comprising:
a plurality of image forming units each having a plurality of image forming sections, and an intermediate transfer body on which toner images formed by the plurality of image forming sections are primarily transferred;
a plurality of secondary transfer units that are provided corresponding to the plurality of the image forming units, and secondarily transfer the toner images of the intermediate transfer body to a recording medium; and
a processor configured to:
in response to an instruction for adjusting misalignment of the toner images,
execute a mode in which a first chart for checking amounts of misalignment between a toner image formed by a reference image forming section and the toner images formed by another image forming section, for each image forming unit, and a second chart for checking amounts of misalignment between toner images formed by the reference image forming sections of the plurality of image forming units are secondarily transferred to the recording medium and output, and an input of a first adjustment value for adjusting misalignment for each image forming unit, read from the first chart, and an input of a second adjustment value for adjusting misalignment between the image forming units, read from the second chart, are received.

2. The image forming apparatus according to claim 1,
wherein in the mode,
after the first chart is secondarily transferred to the recording medium and output to receive the input of the first adjustment value,
the second chart is secondarily transferred to the recording medium and output to receive the input of the second adjustment value.

3. The image forming apparatus according to claim 2,
wherein in the mode,
misalignment of the plurality of the image forming sections of each image forming unit is adjusted by using the first adjustment value, and
misalignment of each of the plurality of image forming sections of the plurality of the image forming units is adjusted by using the second adjustment value.

4. The image forming apparatus according to claim 1,
wherein in the mode,
after the second chart is secondarily transferred to the recording medium and output to receive the input of the second adjustment value,
the first chart is secondarily transferred to the recording medium and output to receive the input of the first adjustment value.

5. The image forming apparatus according to claim 4,
wherein in the mode,
misalignment between the reference image forming sections of the plurality of image forming units is adjusted by using the second adjustment value, and
misalignment of another image forming section with respect to the reference image forming sections of the plurality of image forming units is adjusted by using the first adjustment value.

6. The image forming apparatus according to claim 3 or 5,
wherein in the mode,
in a case where there is an image forming section for which misalignment is not to be adjusted by reflecting the second adjustment value,
the second adjustment value is divided and reflected in the plurality of the image forming units.

7. The image forming apparatus according to claim 6,
wherein in the mode,
in a case where there is an image forming section for which the misalignment is not to be adjusted even by dividing and reflecting the second adjustment value,
the image forming unit that does not have the image forming section, for which the misalignment is not to be adjusted, is selected.

8. The image forming apparatus according to any one of claims 1 to 7,
wherein in the mode,
after the input of the first adjustment value and the input of the second adjustment value are received,
the first chart and the second chart are formed again, secondarily transferred to the recording medium, and output.

9. An image forming program causing a computer to execute a process comprising:
in response to an instruction for adjusting misalignment of toner images,
executing a mode in which a first chart for checking amounts of misalignment between a toner image formed by a reference image forming section and the toner images formed by another image forming section, for each image forming unit, and a second chart for checking amounts of misalignment between toner images formed by the reference image forming sections of a plurality of image forming units are secondarily transferred to a recording medium and output, and an input of a first adjustment value for adjusting misalignment for each image forming unit, read from the first chart, and an input of a second adjustment value for adjusting misalignment between the image forming units, read from the second chart, are received.

## Amended claims

### Amended claims in accordance with Rule 137(2) EPC.

1. An image forming apparatus (10) comprising:
a plurality of image forming units (30, 50) each having a plurality of image forming sections (32, 52), and an intermediate transfer body (40, 60) on which toner images formed by the plurality of image forming sections (32, 52) are primarily transferred;
a plurality of secondary transfer units (74, 76) that are provided corresponding to the plurality of the image forming units (30, 50), and secondarily transfer the toner images of the intermediate transfer body to a recording medium; and
a processor (81) configured to:
in response to an instruction for adjusting misalignment of the toner images in a mode,
secondarily transfer and output a first chart and a second chart on the recording medium,
wherein the first chart comprises a plurality of amounts of misalignment between a toner image formed by a reference image forming section and the toner images formed by another image forming section respectively corresponding to a plurality of first adjustment values, for each image forming unit (30, 50), and
wherein the second chart comprises a plurality of amounts of misalignment between toner images formed by the reference image forming sections of the plurality of image forming units (30, 50) respectively corresponding to a plurality of second adjustment values , and
receive an input of a first designated adjustment value, among the plurality of first adjustment values, for adjusting misalignment for each image forming unit (30, 50), and receive an input of a second designated adjustment value, among the plurality of second adjustment values, for adjusting misalignment between the image forming units (30, 50).

2. The image forming apparatus (10) according to claim 1,
wherein in the mode,
after the first chart is secondarily transferred to the recording medium and output to receive the input of the first designated adjustment value,
the second chart is secondarily transferred to the recording medium and output to receive the input of the second designated adjustment value.

3. The image forming apparatus (10) according to claim 2,
wherein in the mode,
misalignment of the plurality of the image forming sections (32, 52) of each image forming unit (30, 50) is adjusted by using the first designated adjustment value, and
misalignment of each of the plurality of image forming sections (32, 52) of the plurality of the image forming units (30, 50) is adjusted by using the designated second adjustment value.

4. The image forming apparatus (10) according to claim 1,
wherein in the mode,
after the second chart is secondarily transferred to the recording medium and output to receive the input of the second designated adjustment value,
the first chart is secondarily transferred to the recording medium and output to receive the input of the first designated adjustment value.

5. The image forming apparatus (10) according to claim 4,
wherein in the mode,
misalignment between the reference image forming sections of the plurality of image forming units (30, 50) is adjusted by using the second designated adjustment value, and
misalignment of another image forming section with respect to the reference image forming sections of the plurality of image forming units (30, 50) is adjusted by using the first designated adjustment value.

6. The image forming apparatus (10) according to claim 3 or 5,
wherein in the mode,
in a case where there is an image forming section (32, 52) for which misalignment is not to be adjusted by reflecting the second designated adjustment value,
the second designated adjustment value is divided and reflected in the plurality of the image forming units (30, 50).

7. The image forming apparatus (10) according to claim 6,
wherein in the mode,
in a case where there is an image forming section (32, 52) for which the misalignment is not to be adjusted even by dividing and reflecting the second designated adjustment value,
the image forming unit (30, 50) that does not have the image forming section, for which the misalignment is not to be adjusted, is selected.

8. The image forming apparatus (10) according to any one of claims 1 to 7,
wherein in the mode,
after the input of the first designated adjustment value and the input of the second designated adjustment value are received,
the first chart and the second chart are formed again, secondarily transferred to the recording medium, and output.

9. An image forming program causing an image forming apparatus (10) to execute a process comprising:
in response to an instruction for adjusting misalignment of toner images in a mode,
secondarily transferring and outputting a first chart and a second chart on a recording medium,
wherein the first chart comprises a plurality of amounts of misalignment between a toner image formed by a reference image forming section and the toner images formed by another image forming section respectively corresponding to a plurality of first adjustment values, for each image forming unit (30, 50), and
wherein the second chart comprises a plurality of amounts of misalignment between toner images formed by the reference image forming sections of a plurality of image forming units (30, 50) respectively corresponding to a plurality of second adjustment values , and
receiving an input of a first designated adjustment value, among the plurality of first adjustment values, for adjusting misalignment for each image forming unit (30, 50), and receiving an input of a second designated adjustment value, among the plurality of second adjustment values, for adjusting misalignment between the image forming units (30, 50).
